# EUROPÄISCHE PATENTSCHRIFT

(11) **EP 2 932 196 B1**
(45) Veröffentlichungstag und Bekanntmachung des Hinweises auf die Patenterteilung: **15.03.2017**
(21) Anmeldenummer: 13802300.7
(22) Anmeldetag: 28.11.2013
(51) Int. Cl.: G01C 22/02, G07C 5/08

(54) **VERFAHREN ZUM ÜBERPRÜFEN EINER IN EINEM KRAFTFAHRZEUG ANGEZEIGTEN GESAMTFAHRSTRECKE DES KRAFTFAHRZEUGS**
METHOD FOR CHECKING A TOTAL DISTANCE WHICH IS TRAVELLED BY A MOTOR VEHICLE AND IS DISPLAYED THEREIN
PROCÉDÉ POUR VÉRIFIER UN TRAJET TOTAL D'UN VÉHICULE À MOTEUR ET AFFICHÉ DANS CE DERNIER

(30) Priorität: 12.12.2012 DE 102012222834
(43) Veröffentlichungstag der Anmeldung: 21.10.2015
(73) Patentinhaber: Continental Automotive GmbH, 30165 Hannover (DE)
(72) Erfinder: DEML, Ulrich, 93138 Lappersdorf (DE); LENNINGER, Ralf, 97076 Würzburg (DE)
(86) Internationale Anmeldenummer: PCT/EP2013/074981
(87) Internationale Veröffentlichungsnummer: WO 2014/090585

(56) Entgegenhaltungen:
- DE-A1- 1 574 046
- DE-A1-102004 028 336
- DE-A1-102006 060 515

## Beschreibung

Die Erfindung bezieht sich auf ein Verfahren zum Überprüfen einer in einem Kraftfahrzeug angezeigten Gesamtfahrstrecke des Kraftfahrzeugs, wobei eine von dem Kraftfahrzeug zurückgelegte Fahrstrecke während des Betriebs des Kraftfahrzeugs erfasst wird und wobei die erfasste Fahrstrecke mit vorher als zurückgelegte Fahrstrecken erfassten Fahrstrecken des Kraftfahrzeugs zu der Gesamtfahrstrecke des Kraftfahrzeugs aufaddiert wird.

Eine solche Ermittlung und Anzeige einer Gesamtfahrstrecke ist in Kraftfahrzeugen allgemein bekannt. Hierfür ist in Kraftfahrzeugen regelmäßig ein Wegstreckenzähler mit einer zum Beispiel im Bereich einer Geschwindigkeitsanzeigevorrichtung angeordneten Wegstreckenanzeigevorrichtung, die einem Bediener des Kraftfahrzeugs die Gesamtfahrstrecke anzeigt, vorgesehen. Allgemein wird eine zurückgelegte Wegstrecke des Kraftfahrzeugs auch als Fahrstrecke des Kraftfahrzeugs bezeichnet. Die Summe der zurückgelegten Wegstrecken zu einem bestimmten Zeitpunkt ist die Gesamtfahrstrecke des Kraftfahrzeugs zu diesem Zeitpunkt.

Da regelmäßig ein Zusammenhang zwischen dem finanziellen Wert des Kraftfahrzeugs und der von dem Kraftfahrzeug insgesamt zurückgelegten Wegstrecke besteht, ist es von großer Bedeutung, dass die von der Wegstreckenanzeigevorrichtung angezeigte Gesamtfahrstrecke des Kraftfahrzeugs der tatsächlich von dem Kraftfahrzeug insgesamt zurückgelegten Wegstrecke entspricht. Die von der Wegstreckenanzeigevorrichtung angezeigte Gesamtfahrstrecke des Kraftfahrzeugs wird auch als Kilometerstand des Kraftfahrzeugs bezeichnet. In der Regel bedeutet eine höhere Gesamtfahrstrecke einen niedrigeren finanziellen Wert des Kraftfahrzeugs. Es ist bekannt, dass es an Kraftfahrzeugen in betrügerischer Absicht verschiedentlich zu Versuchen gekommen ist, die angezeigte Gesamtfahrstrecke eines Kraftfahrzeugs derart zu manipulieren, dass die angezeigte Gesamtfahrstrecke geringer ist als die tatsächlich von dem jeweiligen Kraftfahrzeug insgesamt zurückgelegte Wegstrecke.

Zur Einschränkung von Möglichkeiten einer Manipulation eines Kilometerstandes eines Fahrzeugs ist aus EP 1 722 199 A1 ein Verfahren bekannt, wonach innerhalb eines Motorblocks eine Ermittlung und Aufzeichnung einer Laufleistung eines Verbrennungsmotors vorgenommen wird. Dabei soll eine Aufzeichnung einer Gesamtlaufzeit des Verbrennungsmotors mit gleichzeitiger Motorverschleißermittlung vorgenommen werden können.

Aus DE 15 74 046 A ist ein Verfahren zum Prüfen und Überwachen einer Abnutzung eines Gegenstandes bekannt, wobei ein zu der Abnutzung proportionaler elektrischer Strom abgeleitet werden soll, der durch eine elektrolytische Speicherzellenanordnung geschickt werden soll. Das Verfahren kann bei einem Garantiemonitor angewendet werden, der für eine Abgabe einer Anzeige verwendet werden kann, ob für ein Automobil noch eine Garantie besteht.

Eine Betriebsdaueranzeige für ein Fahrzeug und ein Verfahren zur Anzeige der Betriebsdauer offenbart DE 10 2004 028 336 A1. Mittels einer irreversiblen Alterung eines Farbänderungswerkstoffes lässt sich damit eine gefahrene Gesamtwegstrecke des Fahrzeugs visualisieren.

Ferner ist aus DE 10 2006 060 515 A1 ein Verfahren zur statistischen Verschleißanalyse bekannt, wobei Messreihen in Abhängigkeit eines Kilometerstandes eines Fahrzeugs aufgezeichnet werden können.

Aufgabe der Erfindung ist es, ein Verfahren der eingangs genannten Art anzugeben, welches auf einfache Weise eine Information darüber ermöglicht, ob die angezeigte Gesamtfahrstrecke der tatsächlich von dem Kraftfahrzeug zurückgelegten Gesamtfahrstrecke entspricht.

Diese Aufgabe wird erfindungsgemäß dadurch gelöst, dass an einem Bauteil eines Steuergeräts des Kraftfahrzeugs eine über eine Zeitperiode erfolgende irreversible Änderung des Bauteils erfasst wird, dass die Größe und/oder Art der Änderung des Bauteils einer auf die Zeitperiode bezogenen Vergleichsfahrstrecke des Kraftfahrzeugs zugeordnet wird, dass die während der Zeitperiode als von dem Kraftfahrzeug zurückgelegte Fahrstrecke erfasste Fahrstrecke in einem Vergleich der Vergleichsfahrstrecke gegenübergestellt wird und dass ein aus dem Vergleich resultierendes Vergleichsergebnis von einem Bediener des Kraftfahrzeugs abrufbar ist oder dem Bediener automatisch übermittelt wird.

Die von dem Kraftfahrzeug zurückgelegte Fahrstrecke während des Betriebs des Kraftfahrzeugs wird, sofern keine Manipulation vorliegt, kontinuierlich, das heißt ohne Unterbrechung während des Betriebs des Kraftfahrzeugs, erfasst, und die erfasste Fahrstrecke wird, sofern keine Manipulation vorliegt, kontinuierlich, das heißt ohne Unterbrechung während des Betriebs des Kraftfahrzeugs, zu der Gesamtfahrstrecke des Kraftfahrzeugs aufaddiert. Die Gesamtfahrstrecke wird vorzugsweise mittels einer Wegstreckenanzeigevorrichtung in dem Kraftfahrzeug angezeigt. Die Anzeige erfolgt vorzugsweise optisch.

Eine mögliche Manipulation der so gewonnenen und angezeigten Gesamtfahrstrecke könnte zum Beispiel derart erfolgen, dass der Wert der Gesamtfahrstrecke beispielsweise durch missbräuchlichen elektronischen Eingriff von außen, zum Beispiel über eine Diagnoseschnittstelle des Kraftfahrzeugs, verringert wird. Angezeigt würde dann der auf diese Weise reduzierte Wert für die Gesamtfahrstrecke. Die angezeigte Gesamtfahrstrecke würde nicht mehr der tatsächlich von dem Kraftfahrzeug insgesamt zurückgelegten Fahrstrecke entsprechen, die tatsächlich von dem Kraftfahrzeug insgesamt zurückgelegte Fahrstrecke wäre größer als die angezeigte Gesamtfahrstrecke. Eine solche Manipulation zuverlässig zu erkennen, ermöglicht vorteilhaft die vorliegende Erfindung.

Eine andere Art von Manipulation der Gesamtfahrstrecke des Kraftfahrzeugs könnte darin bestehen, dass ein Signal, welches der Erfassung der von dem Kraftfahrzeug zurückgelegten Fahrstrecke dient, derart manipuliert wird, dass ein zu geringer oder zum Beispiel zeitweise gar kein Wert für die zurückgelegte Fahrstrecke erfasst wird. Damit würde sich auch eine gegenüber der tatsächlich von dem Kraftfahrzeug zurückgelegten Gesamtfahrstrecke zu geringe angezeigte Gesamtfahrstrecke ergeben. Auch eine derartige Manipulation zuverlässig zu erkennen, ermöglicht vorteilhaft die vorliegende Erfindung.

Von besonderem Vorteil ist bei dem erfindungsgemäßen Verfahren, dass grundsätzlich ein beliebiges Steuergerät des Kraftfahrzeugs als das Steuergerät, an dem die irreversible Änderung erfasst wird, ausgewählt werden kann. Somit kann vorteilhaft ein Steuergerät gewählt werden, an welchem sich die Erfassung der irreversiblen Änderung an einem Bauteil am einfachsten und kostengünstigsten umsetzen lässt. Vorzugsweise ist dieses Steuergerät an der eigentlichen Fahrstreckenerfassung und Gesamtfahrstreckenanzeige nicht beteiligt.

Bei der Erfindung wird eine über eine Zeitperiode erfolgende Änderung an dem Bauteil des Steuergeräts erfasst. Somit wird eine zeitabhängige irreversible Änderung erfasst, wodurch eine Zuordnung zu einer Vergleichsfahrstrecke besonders einfach möglich ist, welche Vergleichsfahrstrecke vorteilhaft für die weiteren erfindungsgemäßen Verfahrensschritte genutzt wird. Die Zuordnung zu der Vergleichsfahrstrecke kann beispielsweise über eine in einem Speicher abgelegte Tabelle, die für bestimmte Zeitperioden jeweils eine bestimmte korrespondierende, zum Beispiel für den Typ des Kraftfahrzeugs vorab empirisch ermittelte, Vergleichsfahrstrecke enthält, erfolgen. Es ist aber auch denkbar, dass zum Beispiel eine in einem Speicher abgelegte Tabelle zur Zuordnung einer Vergleichsfahrstrecke zu einer Zeitperiode verwendet wird, welche Tabelle anhand von tatsächlichen Durchschnittsgeschwindigkeiten des Kraftfahrzeugs dynamisch erstellt wird.

Die Durchführung des Vergleichs der während der Zeitperiode von dem Kraftfahrzeug als zurückgelegte Fahrstrecke erfassten Fahrstrecke mit der Vergleichsfahrstrecke wird vorzugsweise von einem Vergleicher vorgenommen. Der Vergleicher kann vorzugsweise den vorgenannten Speicher mit der dort abgelegten Tabelle umfassen.

Zum Beispiel kann das Steuergerät, welches das Bauteil, dessen irreversible Änderung erfasst wird, aufweist, den Vergleicher umfassen. Der Vergleicher kann aber auch Bestandteil eines Steuergeräts des Kraftfahrzeugs sein, welches Steuergerät kein Bauteil aufweist, dessen irreversible Änderung in dem erfindungsgemäßen Verfahren erfasst wird. Auch ist es vorstellbar, dass der Vergleicher außerhalb des Kraftfahrzeugs angeordnet ist und mit dem Kraftfahrzeug zum Beispiel über eine Diagnoseschnittstelle, die auch eine Mobilfunkschnittstelle sein kann, verbunden wird. Der Vergleicher kann dann zum Beispiel Bestandteil eines Diagnosetesters in einer Werkstatt oder eines Mobilfunkgeräts, auf dem eine geeignete Vergleicher-Anwendungssoftware installiert ist, sein.

Die Erfindung sieht eine vergleichende Gegenüberstellung von der Vergleichsfahrstrecke und der als zurückgelegte Fahrstrecke erfassten Fahrstrecke vor. Ist die Zeitperiode, für welche die irreversible Änderung des Bauteils erfasst wird, das Kraftfahrzeuglebensalter oder zumindest die Gesamtbetriebsdauer des Kraftfahrzeugs, so ist die während der Zeitperiode als zurückgelegte Fahrstrecke erfasste Fahrstrecke die Gesamtfahrstrecke des Kraftfahrzeugs.

Als Referenzwert für die Erfassung der irreversiblen Änderung des Bauteils kann zum Beispiel der Zustand dieses Bauteils zum Zeitpunkt der Inbetriebnahme oder eines Startens des Kraftfahrzeugs dienen. Allgemein kann der genannte Referenzwert der Zustand des Bauteils, dessen irreversible Änderung erfasst wird, zu Beginn der Zeitperiode, über welche die irreversible Änderung erfasst wird, sein.

Besonders vorteilhaft ist bei der Erfindung, dass der Bediener des Kraftfahrzeugs, der zum Beispiel ein Fahrer des Kraftfahrzeugs oder beispielsweise ein Kaufinteressent für das Kraftfahrzeug sein kann, in sehr einfacher Weise über eine Manipulation informiert wird, da er unmittelbar das Vergleichsergebnis erhält, und zwar entweder auf Abruf, zum Beispiel durch Betätigen einer entsprechenden Bedientaste oder durch ein Auslesen des Vergleichsergebnisses zum Beispiel über eine On-Board-Diagnoseschnittstelle des Kraftfahrzeugs, oder automatisch, beispielsweise durch optische und/oder akustische und/oder haptische Anzeige in dem Kraftfahrzeug, zum Beispiel bei einem Starten des Kraftfahrzeugs. Auch denkbar ist ein Abruf des Vergleichsergebnisses über eine Drahtloskommunikationsschnittstelle des Kraftfahrzeugs, über die zum Beispiel ein Mobilfunkgerät mit dem Kraftfahrzeug gekoppelt wird und das Vergleichsergebnis dann auf dem Mobilfunkgerät angezeigt wird.

Eine vorteilhafte Weiterbildung der Erfindung sieht vor, dass an jeweils einem Bauteil von mindestens zwei Steuergeräten des Kraftfahrzeugs eine über die Zeitperiode erfolgende irreversible Änderung des jeweiligen Bauteils erfasst wird, dass die Größe und/oder Art der Änderung des jeweiligen Bauteils jeweils einer auf die Zeitperiode bezogenen Vergleichsfahrstrecke des Kraftfahrzeugs zugeordnet wird und dass die während der Zeitperiode als von dem Kraftfahrzeug zurückgelegte Fahrstrecke erfasste Fahrstrecke in dem Vergleich den mindestens zwei Vergleichsfahrstrecken gegenübergestellt wird. Das Vergleichsergebnis resultiert mit dieser Weiterbildung folglich aus einer Gegenüberstellung der als zurückgelegte Fahrstrecke erfassten Fahrstrecke mit mindestens zwei Vergleichsfahrstrecken in dem Vergleich. Auf diese Weise wird - da zumindest zwei Steuergeräte, die dem potentiellen Manipulanten zudem bekannt sein müssten, in eine Manipulation einzubeziehen wären - die Möglichkeit der Manipulation der angezeigten Gesamtfahrstrecke weiter erschwert, und die Zuverlässigkeit des erfindungsgemäßen Verfahrens wird zusätzlich erhöht.

Für den Bediener ist besonders leicht zu erkennen, ob eine Manipulation vorliegt, wenn gemäß einer vorteilhaften Weiterbildung der Erfindung das Vergleichsergebnis in einer ausschließlich qualitativen Aussage besteht, wonach die während der Zeitperiode als zurückgelegte Fahrstrecke erfasste Fahrstrecke mit der Vergleichsfahrstrecke beziehungsweise den Vergleichsfahrstrecken übereinstimmt oder nicht übereinstimmt. Eine Nicht-Übereinstimmung deutet auf eine Manipulation hin, und der Bediener kann sich beispielsweise an eine Fachwerkstatt wenden, um eine weitere und gegebenenfalls detailliertere Überprüfung vornehmen zu lassen. Eine Nicht-Übereinstimmung liegt vorzugsweise dann vor, wenn die während der Zeitperiode als zurückgelegte Fahrstrecke erfasste Fahrstrecke um mehr als 20 %, insbesondere um mehr als 30 %, von der Vergleichsfahrstrecke beziehungsweise einer der Vergleichsfahrstrecken abweicht.

Die Zeitperiode, für welche die irreversible Änderung an dem Bauteil des Steuergeräts erfasst wird, kann grundsätzlich beliebig gewählt werden. Beispielsweise könnte es für ein Leihfahrzeug interessant sein, als Zeitperiode einen oder mehrere Tage zu wählen, um eine Manipulation zeitlich eng eingrenzen zu können. Für eine besonders gute Übersichtlichkeit des Verfahrens und eine einfache Ergebnisaussage zum Beispiel bei einem Verkauf des Kraftfahrzeugs ist es jedoch von besonderem Vorteil, wenn gemäß einer anderen Weiterbildung der Erfindung die Zeitperiode zumindest die Gesamtbetriebsdauer des Kraftfahrzeugs und die während der Zeitperiode als zurückgelegte Fahrstrecke erfasste Fahrstrecke des Kraftfahrzeugs die Gesamtfahrstrecke des Kraftfahrzeugs ist. Die Gesamtbetriebsdauer des Kraftfahrzeugs ist die Zeitdauer, welche die Summe der einzelnen Betriebszeiten des Kraftfahrzeugs umfasst. Noch einfacher wird das Verfahren, wenn die Zeitperiode, für welche die irreversible Änderung an dem Bauteil des Steuergeräts erfasst wird, das Kraftfahrzeuglebensalter ist, so dass es nicht erforderlich ist, einzelne Betriebszeiten aufwendig zu erfassen und zusammenzuzählen. Da ein Kraftfahrzeug grundsätzlich nicht ständig in Betrieb ist, umfasst das Kraftfahrzeuglebensalter regelmäßig eine wesentlich größere Zeitdauer als die Gesamtbetriebsdauer des Kraftfahrzeugs, wobei die Gesamtbetriebsdauer des Kraftfahrzeugs eine Teilmenge des Kraftfahrzeuglebensalters ist.

Grundsätzlich könnte die zu erfassende irreversible Änderung an dem Bauteil des Steuergeräts beliebiger Art sein. Eine leichte und zuverlässige Erfassbarkeit der irreversiblen Änderung an dem Bauteil des Steuergeräts kann vorteilhaft jedoch dadurch erreicht werden, dass gemäß einer anderen Weiterbildung der Erfindung die irreversible Änderung des Bauteils des Steuergeräts eine alterungsbedingte irreversible chemische und/oder physikalische Änderung an dem Bauteil umfasst.

Eine besonders eindeutige Erfassbarkeit der irreversiblen Änderung des Bauteils kann vorteilhaft erreicht werden, wenn gemäß einer anderen Weiterbildung der Erfindung die irreversible Änderung des Bauteils des Steuergeräts eine irreversible Zerstörung einer in einer Innenlage des Steuergeräts angeordneten Bauteilstruktur des Bauteils aufweist. Durch die Innenlage der Bauteilstruktur wird zum einen eine mögliche Ergebnismanipulation, beispielsweise durch Wiederherstellen der zerstörten Bauteilstruktur, wesentlich erschwert, zum anderen wird dadurch auch einer unbeabsichtigten Beschädigung einer Bauteilstruktur, zum Beispiel beim Einbau des Steuergeräts in das Kraftfahrzeug, vorgebeugt. Insbesondere kann die vorgenannte Bauteilstruktur auch in einer Innenlage des Bauteils des Steuergeräts angeordnet sein. Das Erfassen der irreversiblen Änderung kann in einfacher Weise zum Beispiel in einem Messen einer elektrischen Spannungslage der Bauteilstruktur erfolgen.

Besonders einfach und kostengünstig kann das erfindungsgemäße Verfahren ausgebildet sein, wenn gemäß einer vorteilhaften Weiterbildung der Erfindung die irreversibel zerstörte Bauteilstruktur eine Leiterbahn einer Leiterplatte umfasst.

Gemäß einer anderen vorteilhaften Weiterbildung der Erfindung weist die Bauteilstruktur eine Mehrzahl von Strukturelementen auf, welche Strukturelemente jeweils in Abhängigkeit von einer Fahrstrecke und/oder Betriebszeit des Kraftfahrzeugs irreversibel zerstört werden. Damit kann auf einfache Weise eine gute zeitliche Auflösung der Überprüfung erreicht werden. Vorzugsweise kann die vorgenannte Mehrzahl von Strukturelementen eine Mehrzahl von Leiterbahnen sein. Eine beispielhafte Ausführung könnte die irreversible Zerstörung von Leiterbahnen in einer Innenlage des Steuergeräts sein, wobei zum Beispiel nach jeweils einer bestimmten Fahrstrecke, beispielsweise 10.000 km, eine andere Leiterbahn durch Stromeintrag durchgeschmolzen wird. Werden beispielhaft 30 derartige Leiterbahnen vorgehalten, kann die tatsächliche Gesamtfahrstrecke des Kraftfahrzeugs zwischen 0 km und 300.000 km auf 10.000 km genau abgeschätzt werden. Die Zerstörung der Leiterbahnen muss nicht in Fahrstreckenabschnitten identischer Größe erfolgen, sondern es ist auch denkbar, dass mit kleineren Fahrstreckenabschnitten begonnen wird und dass die Fahrstreckenabschnitte, nach denen jeweils eine Zerstörung erfolgt, später größer werden. Auf diese Weise kann ein über die Zeit sich verringernder Wertverlust, das heißt eine abfallende Wertverlustkurve, des Kraftfahrzeugs durch eine zu Beginn höhere Auflösung abgebildet werden. Weiterhin müssen die Leiterbahnen nicht in unmittelbarer Nachbarschaft zueinander liegen, sondern können beispielsweise auch an verschiedenen Orten des Bauteils, dessen Änderung erfasst wird, angeordnet sein. Das Bauteil kann zum Beispiel eine Leiterplatte sein.

Besonders einfach und kostengünstig ist es, wenn gemäß einer anderen vorteilhaften Weiterbildung der Erfindung die irreversibel zerstörte Bauteilstruktur mindestens ein Strukturelement eines integrierten Schaltkreises umfasst. Die innere Struktur des elektrischen Schaltkreises ist dabei derartig ausgebildet, dass das Strukturelement zeitabhängig oder abhängig von der während des Betriebs des Kraftfahrzeugs erfassten Fahrstrecke zerstört wird. Vorzugsweise sind mehrere derartige Strukturelemente vorgesehen, die sukzessive zerstört werden.

Einer anderen vorteilhaften Weiterbildung der Erfindung entsprechend weist die irreversible Änderung des Bauteils des Steuergeräts eine irreversible Änderung eines elektrischen Parameters, das heißt einer kennzeichnenden elektrischen Größe, des Bauteils auf.

Dabei kann ein besonders verlässliches und günstiges Verfahren dadurch erreicht werden, dass gemäß einer vorteilhaften Weiterbildung der Erfindung das Bauteil ein Kondensator, insbesondere ein Elektrolytkondensator, und der Parameter die Kapazität des Kondensators ist und dass die Änderung des elektrischen Parameters einen Kapazitätsverlust des Kondensators umfasst. Der über die Zeit erfolgende Kapazitätsverlust ist ein Maß für das Lebensalter des Kondensators. Die Kapazität des Kondensators lässt sich vorteilhaft einfach in dem den Kondensator aufweisenden Steuergerät messen.

Weiterhin kann ein besonders verlässliches und günstiges Verfahren dadurch erreicht werden, dass gemäß einer anderen vorteilhaften Weiterbildung der Erfindung das Bauteil ein Kondensator und der Parameter der äquivalente Serienwiderstand, abgekürzt ESR (Equivalent Series Resistance), des Kondensators ist und dass die Änderung des elektrischen Parameters eine altersabhängige Veränderung des äquivalenten Serienwiderstands umfasst.

Einer anderen vorteilhaften Weiterbildung der Erfindung gemäß weist die an dem Bauteil erfasste irreversible Änderung des Bauteils eine Strukturänderung einer Lotstelle auf. Dadurch wird ein besonderes Manipulationserschwernis erreicht. Die Strukturänderung der Lotstelle kann beispielsweise in einer Änderung von Korngrenzen in der Lotstelle bestehen.

Die Möglichkeit einer Manipulation kann vorteilhaft auch dadurch besonders erschwert werden, dass gemäß einer anderen Weiterbildung der Erfindung die an dem Bauteil erfasste irreversible Änderung des Bauteils eine Oxidation einer metallischen Schicht aufweist.

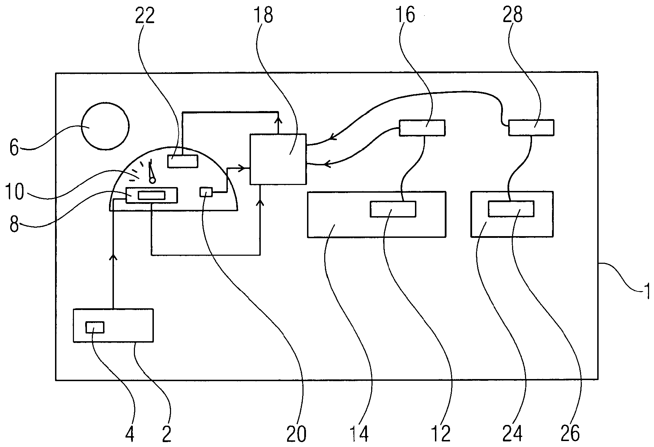

Ein Ausführungsbeispiel der Erfindung wird anhand der schematisierten Zeichnung dargestellt und im Folgenden näher beschrieben. Es zeigt die
- einzige Figur: in schematischer Darstellung ein Kraftfahrzeug mit Steuergeräten und einer Wegstreckenanzeigevorrichtung.

In der einzigen Figur ist in skizzenhafter, schematischer Darstellung ein Verfahren zum Überprüfen einer in einem Kraftfahrzeug 1 angezeigten Gesamtfahrstrecke des Kraftfahrzeugs 1 veranschaulicht.

Eine von dem Kraftfahrzeug 1 zurückgelegte Fahrstrecke wird während des Betriebs des Kraftfahrzeugs 1 mittels einer Wegmesseinrichtung 2 erfasst. Die erfasste Fahrstrecke wird mittels eines Wegstreckenzählers 4 der Wegmesseinrichtung 2 kontinuierlich zu der Gesamtfahrstrecke des Kraftfahrzeugs 1 aufaddiert. Die Gesamtfahrstrecke des Kraftfahrzeugs 1 wird einem Bediener 6 des Kraftfahrzeugs 1 mittels einer Wegstreckenanzeigevorrichtung 8, die hier im Bereich einer Geschwindigkeitsanzeigevorrichtung 10 des Kraftfahrzeugs 1 angeordnet ist, angezeigt. Die Wegstreckenanzeigevorrichtung 8 ist somit eine Gesamtfahrstreckenanzeigevorrichtung.

An einem Bauteil 12 eines ersten Steuergeräts 14 des Kraftfahrzeugs 1 wird eine über eine Zeitperiode erfolgende irreversible Änderung des Bauteils 12 erfasst. Die Erfassung der irreversiblen Änderung des Bauteils 12 erfolgt mittels einer ersten Sensoreinrichtung 16.

In einem Vergleicher 18 wird die Größe und/oder Art der erfassten irreversiblen Änderung des Bauteils 12 des ersten Steuergeräts 14 einer auf die vorgenannte Zeitperiode der Erfassung bezogenen ersten Vergleichsfahrstrecke des Kraftfahrzeugs 1 zugeordnet. Außerdem wird mittels des Vergleichers 18 die während der Zeitperiode als von dem Kraftfahrzeug 1 zurückgelegte Fahrstrecke erfasste Fahrstrecke in einem Vergleich der ersten Vergleichsfahrstrecke gegenübergestellt.

Ein aus dem Vergleich resultierendes Vergleichsergebnis kann von dem Bediener 6 des Kraftfahrzeugs 1 abrufbar sein. In diesem Ausführungsbeispiel ist eine Taste 20 vorgesehen, die von dem Bediener 6 des Kraftfahrzeugs 1 zum Abruf des Vergleichsergebnisses betätigt wird. Das Vergleichsergebnis wird in diesem Beispiel dem Bediener 6 dann mittels eines optischen Anzeigeelements 22 übermittelt. Alternativ kann dem Bediener 6 gemäß einer Variante dieses Ausführungsbeispiels das Vergleichsergebnis automatisch übermittelt werden, wobei direkt im Anschluss an die Durchführung des Vergleichs das Vergleichsergebnis mittels des optischen Anzeigeelements 22 dem Bediener 6 automatisch, das heißt ohne Handlung des Bedieners 6 oder einer anderen Person, übermittelt wird.

Im vorliegenden Ausführungsbeispiel erfolgt eine optische Übermittlung des Vergleichsergebnisses an den Bediener 6 des Kraftfahrzeugs 1. Die Übermittlung des Vergleichsergebnisses an den Bediener 6 kann gemäß Varianten des Ausführungsbeispiels aber auch akustisch oder haptisch erfolgen.

In der einzigen Figur ist erkennbar, dass neben dem ersten Steuergerät 14 ein weiteres Steuergerät 24 des Kraftfahrzeugs 1 vorgesehen ist. An einem Bauteil 26 des weiteren Steuergeräts 24 wird eine über die oben genannte Zeitperiode erfolgende irreversible Änderung dieses Bauteils 26 erfasst. Die Erfassung der irreversiblen Änderung des Bauteils 26 des weiteren Steuergeräts 24 erfolgt mittels einer zweiten Sensoreinrichtung 28. In dem Vergleicher 18 wird die Größe und/oder Art der erfassten irreversiblen Änderung des Bauteils 26 des weiteren Steuergeräts 24 einer auf die vorgenannte Zeitperiode der Erfassung bezogenen zweiten Vergleichsfahrstrecke des Kraftfahrzeugs 1 zugeordnet. Das Vergleichsergebnis ergibt sich bei dieser Variante des Ausführungsbeispiels dann aus dem Vergleich der während der Zeitperiode als zurückgelegte Fahrstrecke erfassten Fahrstrecke mit der ersten Vergleichsfahrstrecke und der zweiten Vergleichsfahrstrecke.

## Patentansprüche

1. Verfahren zum Überprüfen einer in einem Kraftfahrzeug angezeigten Gesamtfahrstrecke des Kraftfahrzeugs, wobei eine von dem Kraftfahrzeug zurückgelegte Fahrstrecke während des Betriebs des Kraftfahrzeugs erfasst wird und wobei die erfasste Fahrstrecke mit vorher als zurückgelegte Fahrstrecken erfassten Fahrstrecken des Kraftfahrzeugs zu der Gesamtfahrstrecke des Kraftfahrzeugs aufaddiert wird, wobei
- an einem Bauteil (12) eines Steuergeräts (14) des Kraftfahrzeugs (1) eine über eine Zeitperiode erfolgende irreversible Änderung des Bauteils (12) erfasst wird, **dadurch gekennzeichnet,**
- **dass** die Größe und/oder Art der Änderung des Bauteils (12) einer auf die Zeitperiode bezogenen Vergleichsfahrstrecke des Kraftfahrzeugs (1) zugeordnet wird,
- **dass** die während der Zeitperiode als von dem Kraftfahrzeug (1) zurückgelegte Fahrstrecke erfasste Fahrstrecke in einem Vergleich der Vergleichsfahrstrecke gegenübergestellt wird
- und **dass** ein aus dem Vergleich resultierendes Vergleichsergebnis von einem Bediener (6) des Kraftfahrzeugs (1) abrufbar ist oder dem Bediener (6) automatisch übermittelt wird.

2. Verfahren nach Anspruch 1, **dadurch gekennzeichnet, dass**
- an jeweils einem Bauteil (12, 26) von mindestens zwei Steuergeräten (14, 24) des Kraftfahrzeugs (1) eine über die Zeitperiode erfolgende irreversible Änderung des jeweiligen Bauteils (12, 26) erfasst wird,
- dass die Größe und/oder Art der Änderung des jeweiligen Bauteils (12, 26) jeweils einer auf die Zeitperiode bezogenen Vergleichsfahrstrecke des Kraftfahrzeugs (1) zugeordnet wird
- und dass die während der Zeitperiode als von dem Kraftfahrzeug (1) zurückgelegte Fahrstrecke erfasste Fahrstrecke in dem Vergleich den mindestens zwei Vergleichsfahrstrecken gegenübergestellt wird.

3. Verfahren nach Anspruch 1 oder 2, **dadurch gekennzeichnet, dass** das Vergleichsergebnis in einer ausschließlich qualitativen Aussage besteht, wonach die während der Zeitperiode als zurückgelegte Fahrstrecke erfasste Fahrstrecke mit der Vergleichsfahrstrecke beziehungsweise den Vergleichsfahrstrecken übereinstimmt oder nicht übereinstimmt.

4. Verfahren nach einem der vorhergehenden Ansprüche, **dadurch gekennzeichnet, dass** die Zeitperiode zumindest die Gesamtbetriebsdauer des Kraftfahrzeugs (1) und die während der Zeitperiode als zurückgelegte Fahrstrecke erfasste Fahrstrecke des Kraftfahrzeugs (1) die Gesamtfahrstrecke des Kraftfahrzeugs (1) ist.

5. Verfahren nach einem der vorhergehenden Ansprüche, **dadurch gekennzeichnet, dass** die irreversible Änderung des Bauteils (12, 26) des Steuergeräts (14, 24) eine alterungsbedingte irreversible chemische und/oder physikalische Änderung an dem Bauteil (12, 26) umfasst.

6. Verfahren nach einem der vorhergehenden Ansprüche, **dadurch gekennzeichnet, dass** die irreversible Änderung des Bauteils (12, 26) des Steuergeräts (14, 24) eine irreversible Zerstörung einer in einer Innenlage des Steuergeräts (14, 24) angeordneten Bauteilstruktur des Bauteils (12, 26) aufweist.

7. Verfahren nach Anspruch 6, **dadurch gekennzeichnet, dass** die irreversibel zerstörte Bauteilstruktur eine Leiterbahn einer Leiterplatte umfasst.

8. Verfahren nach Anspruch 6 oder 7, **dadurch g**e**kennzeichnet**, dass die Bauteilstruktur eine Mehrzahl von Strukturelementen aufweist, welche Strukturelemente jeweils in Abhängigkeit von einer Fahrstrecke und/oder Betriebszeit des Kraftfahrzeugs (1) irreversibel zerstört werden.

9. Verfahren nach einem der Ansprüche 6 bis 8, **dadurch gekennzeichnet, dass** die irreversibel zerstörte Bauteilstruktur mindestens ein Strukturelement eines integrierten Schaltkreises umfasst.

10. Verfahren nach einem der vorhergehenden Ansprüche, **dadurch gekennzeichnet, dass** die irreversible Änderung des Bauteils (12, 26) des Steuergeräts (14, 24) eine irreversible Änderung eines elektrischen Parameters des Bauteils (12, 26) aufweist.

11. Verfahren nach Anspruch 10, **dadurch gekennzeichnet, dass** das Bauteil (12, 26) ein Kondensator und der Parameter die Kapazität des Kondensators ist und dass die Änderung des elektrischen Parameters einen Kapazitätsverlust des Kondensators umfasst.

12. Verfahren nach Anspruch 10 oder 11, **dadurch gekennzeichnet, dass** das Bauteil (12, 26) ein Kondensator und der Parameter der äquivalente Serienwiderstand des Kondensators ist und dass die Änderung des elektrischen Parameters eine altersabhängige Veränderung des äquivalenten Serienwiderstands umfasst.

13. Verfahren nach einem der vorhergehenden Ansprüche, **dadurch gekennzeichnet, dass** die an dem Bauteil (12, 26) erfasste irreversible Änderung des Bauteils (12, 26) eine Strukturänderung einer Lotstelle aufweist.

14. Verfahren nach einem der vorhergehenden Ansprüche, **dadurch gekennzeichnet, dass** die an dem Bauteil (12, 26) erfasste irreversible Änderung des Bauteils (12, 26) eine Oxidation einer metallischen Schicht aufweist.

## Claims

1. Method for checking a total distance which is travelled by a motor vehicle and is displayed therein, wherein a distance which is travelled by the motor vehicle during operation of the motor vehicle is detected and wherein the detected distance is added to distances which have been detected as distances previously travelled by the motor vehicle to form the total distance travelled by the motor vehicle, wherein
- a change in a component (12) of a control device (14) of the motor vehicle (1) which is irreversible and takes place over a time period, is detected on said component (12), **characterized in that**
- the magnitude and/or type of the change in the component (12) is assigned to a comparison distance, related to the time period, travelled by the motor vehicle (1),
- the distance detected during the time period as the distance travelled by the motor vehicle (1) is compared in a comparison with the comparison distance travelled, and
- a result of the comparison can be retrieved by an operator (6) of the motor vehicle (1) or is transmitted automatically to the operator (6).

2. Method according to Claim 1, **characterized in that**
- in each case on one component (12, 26) of at least two control devices (14, 24) of the motor vehicle (1), an irreversible change in the respective component (12, 26) taking place over the time period is detected,
- the magnitude and/or type of the change in the respective component (12, 26) is assigned in each case to a comparison distance, related to the time period, of the motor vehicle (1), - and **in that** the distance detected during the time period as the distance travelled by the motor vehicle (1) is compared in the comparison with the at least two comparison distances travelled.

3. Method according to Claim 1 or 2, **characterized in that** the comparison result consists in an exclusively qualitative statement according to which the distance detected during the time period as the distance travelled matches or does not match the comparison distance travelled or the comparison distances travelled.

4. Method according to one of the preceding claims, **characterized in that** the time period is at least the total operating period of the motor vehicle (1) and the distance travelled by the motor vehicle (1) detected during the time period as the distance travelled is the total distance travelled by the motor vehicle (1).

5. Method according to one of the preceding claims, **characterized in that** the irreversible change in the component (12, 26) of the control device (14, 24) comprises an age-related irreversible chemical and/or physical change in the component (12, 26).

6. Method according to one of the preceding claims, **characterized in that** the irreversible change in the component (12, 26) of the control device (14, 24) entails an irreversible destruction of a component structure of the component (12, 26) disposed in an inner layer of the control device (14, 24).

7. Method according to Claim 6, **characterized in that** the irreversibly destroyed component structure comprises a conductor path of a printed circuit board.

8. Method according to Claim 6 or 7, **characterized in that** the component structure has a plurality of structural elements, said structural elements in each case being irreversibly destroyed depending on a distance travelled and/or operating time of the motor vehicle (1).

9. Method according to one of Claims 6 to 8, **characterized in that** the irreversibly destroyed component structure comprises at least one structural element of an integrated circuit.

10. Method according to one of the preceding claims, **characterized in that** the irreversible change in the component (12, 26) of the control device (14, 24) entails an irreversible change in an electrical parameter of the component (12, 26).

11. Method according to Claim 10, **characterized in that** the component (12, 26) is a capacitor and the parameter is the capacitance of the capacitor, and that the change in the electrical parameter comprises a capacitance loss of the capacitor.

12. Method according to Claim 10 or 11, **characterized in that** the component (12, 26) is a capacitor and the parameter is the equivalent series resistance of the capacitor, and that the change in the electrical parameter comprises an age-related change in the equivalent series resistance.

13. Method according to one of the preceding claims, **characterized in that** the irreversible change in the component (12, 26) detected on the component (12, 26) entails a structural change in a solder joint.

14. Method according to one of the preceding claims, **characterized in that** the irreversible change in the component (12, 26) detected on the component (12, 26) entails an oxidation of a metal layer.

## Revendications

1. Procédé de contrôle d'un trajet total d'un véhicule automobile affiché dans le véhicule automobile, un trajet parcouru par le véhicule automobile pendant le fonctionnement du véhicule automobile étant capté et le trajet capté étant additionné aux trajets captés précédemment en tant que trajets parcourus du véhicule automobile pour former le trajet total du véhicule automobile,
- une modification irréversible d'un composant (12) d'un contrôleur (14) du véhicule automobile (1) ayant eu lieu sur une période donnée étant captée au niveau du composant (12), **caractérisé en ce**
- **que** l'ampleur et/ou la nature de la modification du composant (12) est associée à un trajet comparatif du véhicule automobile (1) rapporté à la période,
- **que** le trajet capté pendant la période en tant que trajet parcouru par le véhicule automobile (1) est confronté au trajet comparatif lors d'une comparaison,
- et **qu'**un résultat de comparaison résultant de la comparaison peut être consulté par un opérateur (6) du véhicule automobile (1) ou est communiqué automatiquement à l'opérateur (6) du véhicule automobile.

2. Procédé selon la revendication 1, **caractérisé en ce**
- **qu'**une modification irréversible d'un composant (12, 26) respectif d'au moins deux contrôleurs (14, 24) du véhicule automobile (1) ayant eu lieu sur une période donnée est captée au niveau du composant (12, 26) respectif,
- **que** l'ampleur et/ou la nature de la modification du composant (12, 26) respectif est associée à un trajet comparatif du véhicule automobile (1) rapporté à la période,
- et **que** le trajet capté pendant la période en tant que trajet parcouru par le véhicule automobile (1) est confronté aux au moins deux trajets comparatifs lors de la comparaison.

3. Procédé selon la revendication 1 ou 2, **caractérisé en ce que** le résultat de comparaison se compose d'une affirmation exclusivement qualitative, selon laquelle le trajet capté en tant que trajet parcouru pendant la période coïncide ou ne coïncide pas avec le trajet comparatif ou les trajets comparatifs.

4. Procédé selon l'une des revendications précédentes, **caractérisé en ce que** la période est au moins la durée de fonctionnement totale du véhicule automobile (1) et le trajet du véhicule automobile (1) capté en tant que trajet parcouru pendant la période est le trajet total du véhicule automobile (1).

5. Procédé selon l'une des revendications précédentes, **caractérisé en ce que** la modification irréversible du composant (12, 26) du contrôleur (14, 24) comprend une modification chimique et/ou physique irréversible liée au vieillissement au niveau du composant (12, 26).

6. Procédé selon l'une des revendications précédentes, **caractérisé en ce que** la modification irréversible du composant (12, 26) du contrôleur (14, 24) comprend une destruction irréversible d'une structure de composant du composant (12, 26) disposée dans une position intérieure du contrôleur (14, 24).

7. Procédé selon la revendication 6, **caractérisé en ce que** la structure irréversiblement détruite comprend une piste conductrice d'un circuit imprimé.

8. Procédé selon la revendication 6 ou 7, **caractérisé en ce que** la structure de composant possède une pluralité d'éléments structuraux, lesquels éléments structuraux sont respectivement détruits irréversiblement en fonction d'un trajet et/ou du temps de fonctionnement du véhicule automobile (1).

9. Procédé selon l'une des revendications 6 à 8, **caractérisé en ce que** la structure de composant irréversiblement détruite comprend au moins un élément structural d'un circuit intégré.

10. Procédé selon l'une des revendications précédentes, **caractérisé en ce que** la modification irréversible du composant (12, 26) du contrôleur (14, 24) présente une modification irréversible d'un paramètre électrique du composant (12, 26).

11. Procédé selon la revendication 10, **caractérisé en ce que** le composant (12, 26) est un condensateur et le paramètre est la capacité du condensateur, et **en ce que** la modification du paramètre électrique comprend une perte de capacité du condensateur.

12. Procédé selon la revendication 10 ou 11, **caractérisé en ce que** le composant (12, 26) est un condensateur et le paramètre est la résistance série équivalente du condensateur, et **en ce que** la modification du paramètre électrique comprend une modification dépendante de l'âge de la résistance série équivalente.

13. Procédé selon l'une des revendications précédentes, **caractérisé en ce que** la modification irréversible du composant (12, 26) captée au niveau du composant (12, 26) présente une modification de structure d'un point de brasage.

14. Procédé selon l'une des revendications précédentes, **caractérisé en ce que** la modification irréversible du composant (12, 26) captée au niveau du composant (12, 26) présente une oxydation d'une couche métallique.
